# EUROPEAN PATENT SPECIFICATION

(11) **EP 4 546 179 B1**
(45) Date of publication and mention of the grant of the patent: **10.06.2026**
(21) Application number: 24201983.4
(22) Date of filing: 23.09.2024
(51) Int. Cl.: G06F 21/31, G06F 21/62, G06F 21/88

(54) **ROUTER INCLUDING ANTI-THEFT FEATURES**
ROUTER MIT DIEBSTAHLSCHUTZFUNKTIONEN
ROUTEUR COMPRENANT DES CARACTÉRISTIQUES ANTIVOL

(30) Priority: 26.10.2023 US 202318495328
(43) Date of publication of application: 30.04.2025
(73) Proprietor: Nokia Solutions and Networks Oy, 02610 Espoo (FI)
(72) Inventor: BIDGOLI, Hooman, Ottawa, K2T0E4 (CA)
(74) Representative: Novagraaf Technologies

(56) References cited:
- US-A1- 2019 354 685
- US-B1- 7 818 790
- LAUER B: "SCHNELLER INTERNETZUGANG FUER KLEINE NETZE", FUNKSCHAU, WEKA FACHZEITSCHRIFTEN VERLAG, POING, DE, vol. 73, no. 9, 14 April 2000 (2000-04-14), pages 38 - 42, XP000966564, ISSN: 0016-2841
- ANONYMOUS: "Password - Wikipedia", 20 October 2023 (2023-10-20), XP093255882, Retrieved from the Internet <URL:https://web.archive.org/web/20231020232247/https://en.wikipedia.org/wiki/Password> [retrieved on 20250304]

## Description

### FIELD

One or more example embodiments relate to mitigating and/or preventing theft and/or reuse of stolen routers.

### BACKGROUND

For ease of installment and flexibility in location, it is often advantageous for networks to include network routers (hereafter referred to as "routers") having relatively small size. Unfortunately, this advantage also increases the ease for theft of the same routers. Though physical mechanisms such as cages or placing the routers in inaccessible locations, are commonly used to prevent theft, it is estimated that theft of routers is still a multi-million dollar business.

Document US2019354685A1 discloses secure router operation and initialization. A router may require at least two sets of credentials at different phases of initialization, thereby adhering to a multi-layered security approach. In a first phase of a router initializing for operation, a boot loader of the router may require a first authentication in order to unlock the full-disk encryption and commence booting into firmware. In a second phase, the firmware of the router may require second authentication to continue the initialization and to unlock the file-based encryption and access the settings of the router, after which the router may be fully operational.

Document US7818790B1 discloses monitoring of a network of routers by a monitoring server. Each router implements various security mechanisms to secure the operation of the routers. For example, each router comprises control logic that implements a security protocol dictated, at least in part, by contents of at least two separate external storage devices, each storage device separate from, but coupled to, one of the ports of said router.

### SUMMARY

One or more example embodiments provide mechanisms of mitigating and/or preventing router theft, and restricting reuse of stolen routers.

The invention provides a router in accordance with claim 1 and a method in accordance with claim 11. Preferred embodiments are set out in the dependent claims.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 illustrates an example of a router according to example embodiments;
FIG. 2 is a flow chart illustrating a method according to example embodiments;
FIG. 3 is a flowchart illustrating a method according to example embodiments;
FIG. 4 is a flowchart illustrating an example of an operation of FIG. 3, according to example embodiments; and
FIG. 5 is a flowchart illustrating an example encryption/decryption according to example embodiments.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown. In the description and in the accompanying drawings, like numerals refer to like elements throughout. Therefore, the repeated descriptions of like element may be omitted. In this regard, the example embodiments may have different forms and should not be construed as being limited to the descriptions set forth herein. Accordingly, the example embodiments are merely described below, by referring to the figures, to explain example embodiments of the present description. Aspects of various embodiments are specified in the claims.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

Accordingly, while example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

It will be appreciated that a number of example embodiments described herein may be used in combination.

While one or more example embodiments may be described from the perspective of a router or other network equipment, it should be understood that one or more example embodiments discussed herein may be performed by one or more processors (or processing circuitry) at the applicable device. For example, according to one or more example embodiments, at least one memory may include or store computer-executable instructions that, when executed by at least one processor, cause the router to perform one or more operations discussed herein.

As discussed herein, the terminology "one or more" and "at least one" may be used interchangeably.

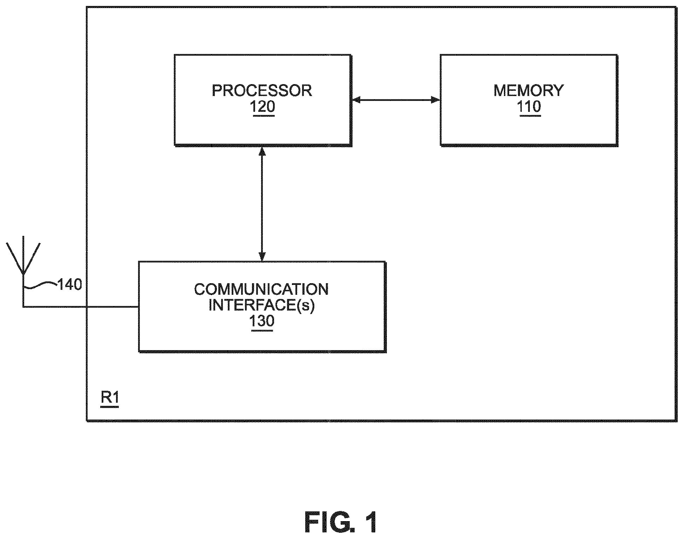

FIG. 1 illustrates an example of a router R1, according to at least one example embodiment.

As shown, the router R1 may be a wireless and/or wireline router including: a memory 110; a processor 120 connected to the memory 110; communication interface 130 connected to the processor 120; and one or more antennas (and/or antenna panel(s)) 140 connected to the communication interface 130. The communication interface 130 and the antenna(s) 140 may constitute a transceiver for transmitting/receiving data from/to the other devices via a wireless link. The communication interface 130 may also be configured to transmit and receive data to and from other devices via a wired link (e.g., via an Ethernet, optical, coaxial, and/or other connection). As will be appreciated, depending on the implementation of the router R1, the router R1 may include more components than those shown in FIG. 1. In at least one embodiment, the router R1 may be a control processor module (CPM) router and/or a pizza box form router.

The memory 110 may be a computer readable storage medium that generally includes a random access memory (RAM), read only memory (ROM), and/or a permanent mass storage device, such as a disk drive. The memory 110 also stores an operating system and any other routines/modules/applications for providing the functionalities of the router R1 (e.g., the methods according to the example embodiments, etc.) to be executed by the processor 120. These software components may also be loaded from a separate computer readable storage medium into the memory 110 using a drive mechanism (not shown). Such separate computer readable storage medium may include a disc, tape, DVD/CD-ROM drive, memory card, or other like computer readable storage medium (not shown). In some example embodiments, software components may be loaded into the memory 110 via one of the communication interface 130, rather than via a computer readable storage medium.

As discussed in further detail below, the memory 110 may include a non-volatile memory storing encrypted and/or non-encrypted configuration files (hereafter the "Router config files"). The memory 110 may include a secure memory location, such as a boot-loader memory, boot Read-Only memory (boot-ROM) and/or a Trusted Platform Module (TPM), which protects against unauthorized access and/or modification. As described in further detail below, an anti-theft feature, the Router config files, and/or an anti-theft password may be stored in the secure location. In at least one example embodiment, the router R1 may have the anti-theft feature installed by the manufacturer (e.g., when the router is Greenfield deployed) and/or the anti-theft feature may be added after purchase and/or deployment (e.g., when the router is Brownfield deployed).

In at least one example embodiment, the router may be configured to start in a normal operational mode until the anti-theft feature is activated such that the user is able to set an anti-theft password. In these cases, the user can activate the anti-theft feature after the router R1 is installed or the anti-theft feature may be activated before the router is installed.

In at least one example embodiment, the anti-theft password may be set by the seller and/or manufacturer, and changed after the router is installed or during installation. Alternatively, in at least some example embodiments, the anti-theft password may be a pseudo-random passcode token generated to match a corresponding one-time passcode generator supplied to a user.

Still referring to FIG. 1, the processor 120 may be configured to carry out instructions of a computer program by performing the arithmetical, logical, and input/output operations of the system. Instructions may be obtained from the memory 110 by the processor 120.

The communication interface 130 may include components that interface the processor 120 with the antenna(s) 140, or other input/output components. As will be understood, the communication interface 130 and the programs stored in the memory 110 to set forth the special purpose functionalities of the router R1 may vary depending on the implementation of the router R1. In at least one example embodiment, the router R1 may be configured to operate as a node in a wireless network including a plurality of nodes. In another example, the router R1 may be configured to operate as a node in a wired network including a plurality of nodes.

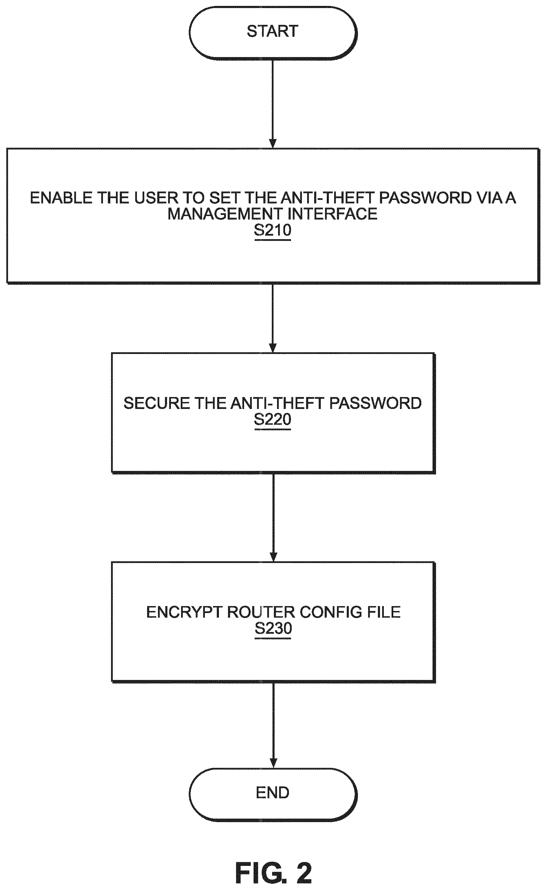

FIG. 2 is a flowchart illustrating a method for entering and/or activating an anti-theft mode according to example embodiments. For explanatory purposes, the method shown in FIG. 2 will be described with regard to the router R1 shown in FIG. 1 (referred to further below as "router"). However, the example embodiments should not be limited to this example.

Referring to FIG. 2, at operation S210 the router prompts the user to set an anti-theft password. For example, in at least some embodiments, the router is configured to enter and/or activate the anti-theft mode in response to a command input to enter the anti-theft mode and/or the entering of the anti-theft password through a management interface such as a command line interface (CLI), simple network management protocol (SNMP), Netconf (network configuration protocol), Netconf/YANG, secure shell (SSH), SSH/Telnet, etc.

For example, in some embodiments, the password is configured via a CLI knob. In at least one embodiment, a network manager and/or network service provider (NSP) may set (and/or manage) the anti-theft password. In these examples, changes to the anti-theft feature (e.g., turning on/off the feature and/or changing the password) may be restricted to an administrator account, the network manager account, an NSP account, etc. Therefore, users without the correct privileges may be restricted from disabling and/or modifying parameters of the anti-theft mode (e.g., changing the anti-theft password).

In at least one embodiment, the router is configured to require that the anti-theft password satisfy (e.g., preset) security requirements, such as character length requirements, alphanumeric requirements, special character requirements, etc.

At operation S220, in response to entering the anti-theft mode, the router secures the anti-theft password in nonvolatile memory. For example, the anti-theft password may be stored in clear text in a secure area of the nonvolatile memory (e.g., in a trusted platform module (TPM)) and/or as a hash format (or value). The anti-theft password may be stored in the non-volatile memory in encrypted and/or hash format such that the anti-theft password is not compromised if the location of the password in the memory is discovered or known. For example, the anti-theft password may be secured via an advanced encryption standard (AES) algorithm and/or via a hashing algorithm (like secure hash algorithm (SHA) including, e.g., SHA-256 or PBKDF2-SHA256). Storing the anti-theft password on the system in hash format or encrypted format ensures that the original password is not exposed even if the location of the password in the non-volatile memory or the trusted platform module (TPM) is compromised and known to the thief. In at least some embodiments, the router generates and stores a hash value from the anti-theft password and stores the hash value. For example, in at least one example embodiment, the hash value is generated from the anti-theft password, using a Key Derivation Function (KDF) and appropriate hash algorithms (such as a secure hash algorithm (SHA) including, e.g., SHA-256 or PBKDF2-SHA256 and/or the like). In at least some example embodiments, generating the hash value of the password may include adding SALT to the password to ensure the recovery of password is difficult via password recovery attacks like, brute force or dictionary attacks and/or rainbow attacks. In at least one embodiment, the generating the hash value occurs only in volatile memory and the hash value is stored in a location of the non-volatile memory, such that, upon a reboot of the router, data related to the hashing the password is not retained (or lost). As mentioned and similar to the above, securing the anti-theft password in hash format (and/or in an encrypted format) ensures that the anti-theft password is not exposed even if the location of the anti-theft password in non-volatile memory or the TPM is compromised and/or known, e.g., by the thief.

For example, the non-volatile memory location storing the hash value may be a secure area of the memory, such as the boot loader memory, the boot-ROM, and/or a TPM. As mentioned above, in at least one embodiment, the operating system (OS) of the router may be prevented from accessing the secure area. The router may be configured such that the anti-theft password cannot be displayed in any show commands, tools command, and/or other commands. In cases wherein a command requires confirmation regarding the status of the anti-theft password the anti-theft feature is configured to display only the hashed format and/or to indicate that the anti-theft password is set, without displaying the clear text format of the anti-theft password. In at least some embodiments, storing the anti-theft password includes encrypting the anti-theft password and/or storing a hash generated from the anti-theft password.

At operation S230, the router encrypts and stores the encrypted router configuration file (hereafter Router config file).

For example, in at least some embodiments, when the router enters anti-theft mode, the Router config file is encrypted, such that a rogue user or the thief cannot modify the Router config file or load a new config file on the router. In at least one embodiment, the hash value generated from the anti-theft password is used as a key for the encryption.

As described in further detail below, if the router is in anti-theft mode and the correct anti-theft password has been entered (such that the router is operating in normal mode of operation) the users can save the router configuration as long as the router does not reboot. For example, saving new router configuration will result in the encrypted config file being decrypted in the volatile memory, the new configuration being appended to the Router config file, and the router configuration being stored in encrypted format in the nonvolatile memory. That said, as described below in further detail, if the router is in anti-theft mode and the router reboots the Router config file is decrypted first (e.g., via the correct decryption key) and loaded on the router so the router can provide connectivity (CLI, SNMP, etc.) to the network administrator such that the network administrator may enter the anti-theft password. It should be noted, when the router is booting up, if the router is not capable of decrypting the configuration file correctly then it will not load the Router config file, and the router determines that the configuration file has been tampered with by the thief. As an example if the thief has replaced the configuration file with a new configuration file, and since the thief does not know the correct encryption key for the configuration file, the new configuration file will be in clear text or encrypted via the wrong key. As such, the loading of the configuration file will fail since it is not decrypted correctly by the anti-theft encryption key set by the owner of the router.

The Router config file may be stored with or separate from the anti-theft password hash value. In at least one embodiment, the Router config file may be, for example, a config file enabling the router to operate as part of the network, and may include, e.g., config files for the Simple Network Management Protocol (SNMP), a Common Management Information Protocol (CMIP), Common Management Information Service (CMIS), or the like.

Thus, while in the anti-theft mode, the anti-theft feature is executed at least each time the router is booted up, thereby preventing the router from replacing and/or changing the Router config file until after a successful verification (i.e., the correct anti-theft password is input). More specifically, while in the anti-theft mode, the anti-theft feature is executed each time the router is booted up after, e.g., a power off, a hard reboot, a soft reboot, and/or the like.

As described in further detail below, the anti-theft password may be used by the router to confirm that the user is permitted to use the router, that the router is permitted to access a local network, that the router has not been stolen, etc.

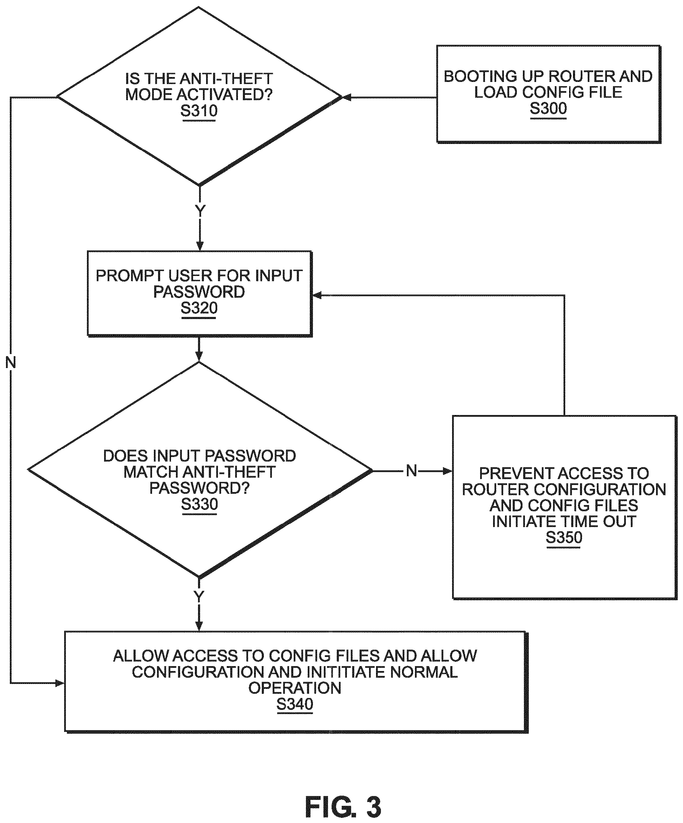

FIG. 3 is a flowchart illustrating a method of operating a router in the anti-theft mode according to example embodiments. For explanatory purposes, the method shown in FIG. 3 will be described with regard to the router R1 shown in FIG. 1 (referred to further below as "router"). However, the example embodiments should not be limited to this example.

Referring to FIG. 3, at operation S300, the router is booted up. During boot-up, the router retrieves boot-up instructions from the memory and stores the boot-up instructions in an operational memory of the processing circuitry, such as a static random access memory (SRAM) and/or dynamic RAM (DRAM). At this time, the router may also retrieve and decrypt the Router config file, and may store the decrypted Router config file in the operational memory. In at least one embodiment, the decryption of the Router config file may be performed entirely in the operational memory. For example, in at least some embodiments, the operational memory may be a volatile memory such that any data related to the decrypting of the Router config file is automatically lost during a reboot.

For example, the encrypted Router config file may be decrypted and loaded into the operational memory of the router at operation S300. In at least one embodiment, when the router is in anti-theft mode, the Router config file is only loaded if the decryption and validation are correct. In the case wherein the router determines that the Router config file has been tampered with and the router will not execute said config file. The anti-theft feature will further prevent the unauthorized user from entering the configuration menu of the router and/or have the router to repeatedly reboot. As such, since no config files have been executed, the router is rendered inoperable.

Additionally, in at least one embodiment, the encrypted Router config file may be referred to a 'startup' config file, and the Router config file stored in the operational memory may be referred to as a 'running' config file. In at least one embodiment, the Router config files are executed by the router, even without password authentication, such that the router is enabled to connect to the network corresponding to the Router config file such that a user is enabled to enter the anti-theft password remotely. However, the anti-theft features prevent the modification or replacement of the running config files and the startup config file. In these cases, since the startup config files are prevented from being modified or replaced, if the conditions for the router, such as location, network, etc., have changed, the router cannot update the running config files to compensate for the change, and therefore, the router cannot successfully execute the Router config files under the changed conditions and is therefore rendered inoperable under the changed conditions.

At operation S310, the router determines whether the anti-theft mode is active. For example, the router may determine that the anti-theft mode is active based on the boot-up instructions including instructions to execute the operations of the anti-theft mode.

If the router determines that the anti-theft mode is active, then at operation S320 the router prompts the user to input the anti-theft password secured, for example, in accordance with the method shown in FIG. 2. The user may enter a password using an input device such as a keypad, keyboard, touch pad, and/or the like.

At operation S330, the router determines whether the password input by the user (hereafter the "input password") matches the anti-theft password by comparing the input password with the anti-theft password. In one example, the comparison may be simple comparison of hash values generated based on the input password and the anti-theft password.

If the router determines that the input password matches the anti-theft password, then at operation S340, the anti-theft feature allows for the access and modification of the Router config file and/or allows the user to configure the router via a management interface (e.g., CLI, SNMP, Netconf, Netconf/YANG, SSH, SSH/Telnet, etc.). As such, in at least some embodiments, the configurations (required for the normal operation of the router, but not for the anti-theft feature and the boot-up of the router) may also be allowed.

In at least some embodiments, the user may be further prompted to enter user credentials. For example, the user may be prompted to enter the user credentials before or after the operations S310 and/or S340. In at least one example, the user credentials may include a user identification (ID) and a user password. The input user ID and user password may be compared to a stored user ID and user password, and if the input user ID and user password matches the stored user ID and user password, the router may be configured to further load the settings and/or account of the user matching the user ID. Alternatively, in at least one embodiment, if the input user ID and/or user password does not match the stored user ID and/or user password, router may operate normally such that router is permitted to, e.g., modify/update the startup config files (e.g., the Router config files stored in the memory 110) and/or running Router config files (e.g., once decrypted), but the user may be prevented from changing the settings of the router. For example, in these cases, until a valid user is confirmed, the anti-theft mode cannot be deactivated and/or the anti-theft password cannot be changed.

Returning to operation S330, if the router determines that the input password does not match the anti-theft password, then at operation S350 the router does not permit (prevents) the access and/or modification of router configuration and/or the Router config file(s) and/or any other configuration of the router. By preventing access and/or modification of the configuration and Router config file(s) until after confirmation that the input password matches the anti-theft password, the router is prevented from complying with the standards and protocols required by changes to the network. Accordingly, if the router has been, e.g., moved to a new network, the router is rendered inoperative or useless as a router until an input password matching the anti-theft password is entered by the user. The router is also configured to prevent the upload and execution of new Router config files and/or enact disruptive behavior (e.g., periodic reboots, operational memory dumps, etc.) in order to prevent an unauthorized user (e.g., a thief) from by-passing the anti-theft feature using files stored and/or transferred from, for example, a compact flash and/or memory drive. This is described in further detail below.

Also at operation S350, the router may initiate a time out in response to a determination that the input password does not match the anti-theft password. The time out temporally delays additional attempts at entering subsequent passwords when prompted (e.g., via the anti-theft feature). The delay may be a preset delay or time interval set by a user or network administrator or the manufacturer of the router. Once the delay time or time interval has expired, the process returns to operation S320 and continues as discussed herein.

In at least one embodiment, the router may include a counter configured to track the number unsuccessful attempts (e.g., the number of times the input password does not match the anti-theft password). In at least some embodiments, the counter is used to pause attempts after a number of unsuccessful attempts reaches a threshold and/or to increase the delay after each unsuccessful attempt. In at least some embodiments, the delay grows exponentially with each unsuccessful attempt which may prevent (and/or mitigates) an unauthorized user (e.g., the thief) from determining the password via brute force (e.g., by attempting to guess at the password, using a dictionary attack, and/or the like). For example, in at least one embodiment, the increase in delay may be exponentially related to the number of unsuccessful attempts, such that the delay may be set to increase based on n^{m}, wherein "n" represents a delay time unit (e.g., 2 seconds, 5 seconds, 10 seconds, 30 seconds, etc.) and "m" represents the count of unsuccessful attempts. However, the example embodiments are not limited thereto, and in at least some embodiments the time out and/or the counter may be omitted.

In at least some embodiments, the counter may be reset once the router is permitted to operate in the normal operation. For example, the counter may be reset automatically after a valid password is input.

Returning to operation S310, if the router determines that the anti-theft mode is not activated, then the process proceeds to step S340 at which access to config files is allowed and normal operation is initiated as discussed herein.

According to one or more example embodiments, after access to the configuration and the Router config file is allowed, the router initiates the normal operation mode, and, until the anti-theft feature is turned-off by an authorized user (e.g., an administrator, the network manager, NSP, etc.), the router repeats operations S300-S350 each time the router is booted up. Turning-off the anti-theft feature is prevented unless the router is further operating under the normal operation mode.

In at least one embodiment, the authorized user may be periodically and/or automatically prompted to update the anti-theft password. For example, the period between updates may be set based on a temporal period between updates (e.g., 6 months, a year, etc.), changes to the administer (e.g., the addition and/or deletion of an authorized user ID and/or a change to a user password), and/or the like. In at least one example embodiment, the authorized user may set and/or adjust the period between updates.

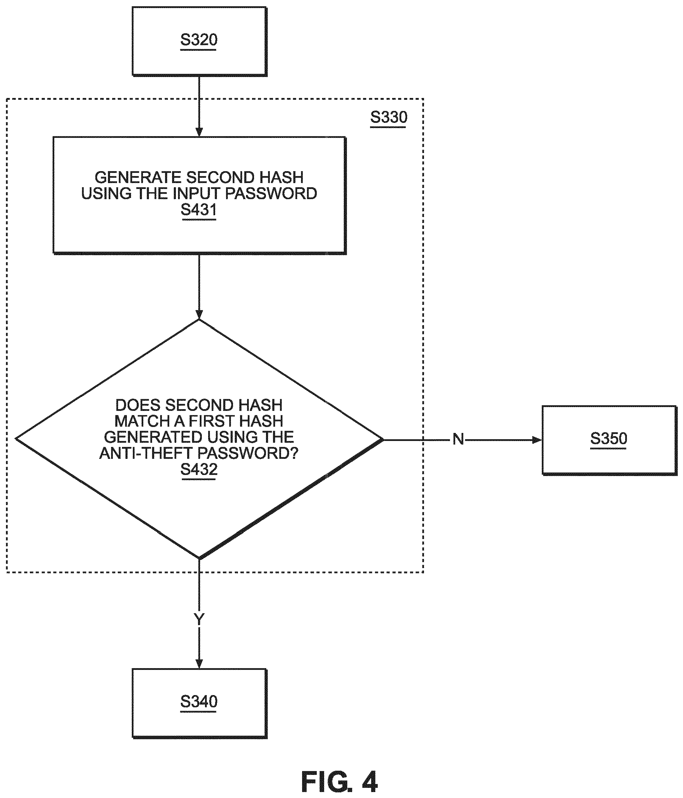

FIG. 4 is a flowchart illustrating an example of operation S330 of FIG. 3, according to example embodiments. In these examples, a hash operation is performed in order to determine whether the input password matches the anti-theft password.

Referring to FIG. 4, at operation S431, the router generates a first hash value using the input password or the input password and at least a portion of the Router config file.

For example, in at least one embodiment, when the router is in anti-theft mode and boots up, after validating and decrypting the router configuration file and providing connectivity to the router, the user is prompted to enter an input password (S320), and, at operation S431, a hash value is generated based on the input password. In at least some embodiments, the generating the hash value based on the input password is also limited to the operational memory, such that the data associated with generating the hash value is lost during a reboot.

At operation S432, the hash value generated based on the input password (hereafter a second hash) is compared to the hash value generated based on the anti-theft password (hereafter a first hash). More specifically, if the anti-theft password stored on the system and the input password are hashed via the same methods, then the first and second hash values should match. Therefore, if the two hash values match that means that the input password has been entered correctly. If the two hash value do not match, then it means the correct password was not entered. Thus, in this example, the secured anti-theft password may be compared with the user's input password and the router enters the normal mode of operation if the two hash values match.

In other words, if the first hash matches the second hash, the method proceeds to operation S340. If the first hash does not match the second hash, the method proceeds to S350.

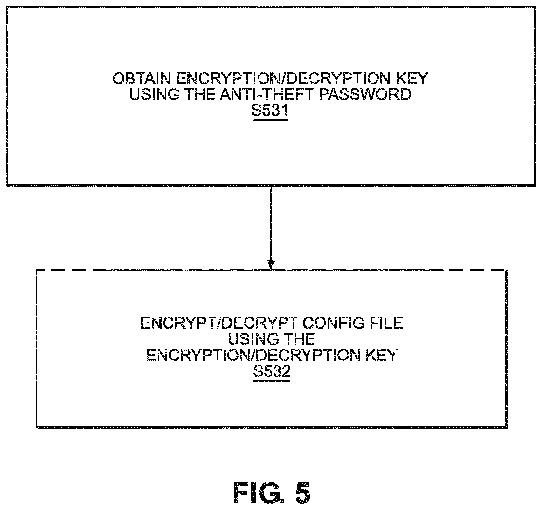

FIG. 5 is a flowchart illustrating an example encryption/decryption operation according to some example embodiments.

At operation S531, an encryption/decryption key is obtained. The encryption/decryption key is used with an encryption algorithm to encrypt and/or decrypt the Router config file. As an example the Router config file may be encrypted based on an encryption algorithm such as (AES-256). In at least one embodiment, the encryption/decryption key is derived from the anti-theft password. For example, the encryption/decryption key may be derived from the anti-theft password itself and/or from a key derivation function (KDF) of the anti-theft password.

At operation S532, the router uses the encryption/decryption key to encrypt/decrypt the Router config file. In at least some embodiments, SALT or other methods may be used to increase the security of the encryption. This will ensure that the Router config file cannot be tampered with (e.g., by the thief) or replaced as any tampering with the file will result in a failure during the decrypting of the file.

In at least some example embodiments, the encryption of the config files may be applied in operation S230, in order to secure the config file, and/or the decryption of the config files may be applied in operation S300.

For example, in at least some embodiments, when the router attempts to boot up (e.g., operation S300 of FIG. 3), the router attempts to decrypt at least a portion of an encrypted Router config file using the encryption/decryption key.

In these cases, the router determines whether the result of the decryption operation, using the encryption/decryption key, is valid; that is, for example, whether the Router config file has been successfully decrypted. In at least one example, an invalid result of the decryption operation may be a nonsensical and/or nonfunctional output, which, if executed, would not allow for the router to connect to a network and/or for the operation of the router. In these cases, the router is configured to not execute the output of the decryption. Alternatively, after a successful decryption, the router executes the output of the decryption, enabling the router to establish a connection to the original network.

More specifically, when the router is booting up in the anti-theft mode and is loading the Router config file, if the router cannot decrypt the config file or verify the decrypted config file, the router determines that the Router config file is tampered with and will not execute or load the Router config file. If the router can decrypt and verify the Router config file then it will load the Router config file even before the anti-theft password is entered, so that the router can provide, e.g., a network administrator connectivity to the router in order to enter the anti-theft password and enable the router in a normal mode of operation. Since, the original Router config file is not useful to a thief, as the original Router config file is specific to the original owner and network of the router, the original configuration file is useless to the thief's network if the original configuration file is loaded after the router is stolen.

As described above, routers according to one or more example embodiments may include an anti-theft feature that, even in the case wherein the router is stolen and/or the Router config files are modified and/or replaced without permission, does not allow any configuration to be entered, thereby reducing the value and viability of the router if stolen.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing switches, hubs, routers, or other network elements, equipment and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a router or other network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, switches, hubs, routers, other network elements, equipment, hardware, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A router (R1) comprising means to:
determine whether a first input password matches a secured anti-theft password stored in a memory (110) of the router (R1), and
control at least one of accessing or modifying of the configuration file and configuration of the router (R1) based on whether the first input password matches the secured anti-theft password, the configuration file being an encrypted configuration file encrypted using an encryption key, wherein the encryption key is based on the secured anti-theft password,
decrypt at least a portion of the encrypted configuration file, and
determine whether a result of the decryption is valid;
prevent an execution of the output of the decryption in response to determining that the result is invalid.

2. The router (R1) of claim 1, wherein the means further cause the router (R1) to permit the at least one of accessing or modifying of the configuration of the router (R1) and to permit the at least one of access or modifying of the configuration file in response to determining that the first input password matches the anti-theft password.

3. The router (R1) of any of the preceding claims, wherein the means further cause the router (R1) to prevent the at least one of accessing or modifying of the configuration of the router (R1) and to prevent the at least one of accessing or modifying of the configuration file in response to determining that the first input password does not match the anti-theft password.

4. The router (R1) of any of the preceding claims, wherein
the means further cause the router (R1) to
obtain the encrypted configuration file from a secure area of the memory (110), and decrypt the encrypted configuration file to obtain a decrypted configuration file, and configure the router (R1) based on the decrypted configuration file, and
the control the at least one of accessing or modifying of the configuration file further includes preventing replacement of the encrypted configuration file with another configuration file.

5. The router (R1) of any of the preceding claims, wherein the secured anti-theft password is encrypted and stored in a secure area of the memory (110).

6. The router (R1) of claim 5, wherein the secure area of the memory (110) includes at least one of a boot-Read Only Memory, boot-ROM, a boot-loader memory, or a trusted platform module, TPM.

7. The router (R1) of any of the preceding claims, wherein the configuration file, when loaded on the router (R1), configures the router (R1) to comply with standards and protocols for a network.

8. The router (R1) of any of the preceding claims, wherein the means further cause the router (R1) to
prevent entry of a second input password for a time interval in response to determining that the first input password does not match the secured anti-theft password.

9. The router (R1) of claim 8, wherein the means further cause the router (R1) to
prompt for input of the second input password after expiration of the time interval,
determine whether the second input password matches the secured anti-theft password, and
control the at least one of accessing or modifying of the configuration file and the configuration of the router (R1) based on whether the second input password matches the secured anti-theft password.

10. The router (R1) of any of the preceding claims, wherein the means further cause the router (R1) to
generate a first hash using the first input password, and
determine whether the first input password matches the secured anti-theft password by comparing the first hash with a second hash generated using the secured anti-theft password.

11. A method of operating an anti-theft feature of a router (R1), the router (R1) including processing circuitry (120) and memory (110), the method comprising:
determining (S330) whether a first input password matches a secured anti-theft password stored in the memory (110); and
controlling (S340) at least one of accessing or modifying of a configuration file and configuration of the router (R1) based on whether the first input password matches the secured anti-theft password, wherein the configuration file is an encrypted configuration file encrypted using an encryption key, wherein the encryption key is based on the secured anti-theft password,
decrypting at least a portion of the encrypted configuration file, and
determining whether a result of the decryption is valid;
preventing an execution of the output of the decryption in response to determining that the result is invalid.

12. The method of claim 11, wherein the controlling (S340) the at least one of accessing and modifying of the configuration file and the configuration of the router (R1) includes permitting the at least one of accessing or modifying of the configuration of the router (R1) and permitting the at least one of accessing or modifying of the configuration file in response to determining that the first input password matches the secured anti-theft password.

13. The method of any of claims 11-12, wherein the controlling (S340) the at least one of access and modifying of the configuration file and the configuration of the router (R1) includes preventing the at least one of accessing or modifying of the configuration of the router (R1) and preventing the accessing and modifying of the configuration file in response to determining that the first input password does not match the secured anti-theft password.

## Patentansprüche

1. Router (R1), umfassend Mittel zum:
Bestimmen, ob ein erstes Eingabepasswort mit einem gesicherten Diebstahlschutzpasswort übereinstimmt, das in einem Speicher (110) des Routers (R1) gespeichert ist, und
Steuern mindestens eines von Zugreifen auf und Modifizieren der Konfigurationsdatei und der Konfiguration des Routers (R1) basierend darauf, ob das erste Eingabepasswort mit dem gesicherten Diebstahlschutzpasswort übereinstimmt, wobei die Konfigurationsdatei eine verschlüsselte Konfigurationsdatei ist, die unter Verwendung eines Verschlüsselungsschlüssels verschlüsselt ist, wobei der Verschlüsselungsschlüssel auf dem gesicherten Diebstahlschutzpasswort basiert,
Entschlüsseln mindestens eines Teils der verschlüsselten Konfigurationsdatei, und
Bestimmen, ob ein Ergebnis der Entschlüsselung gültig ist;
Verhindern einer Ausführung der Ausgabe der Entschlüsselung als Reaktion auf die Bestimmung, dass das Ergebnis ungültig ist.

2. Router (R1) nach Anspruch 1, wobei die Mittel ferner den Router (R1) veranlassen, das mindestens eine von Zugreifen auf und Modifizieren der Konfiguration des Routers (R1) zu ermöglichen und das mindestens eine von Zugreifen auf und Modifizieren der Konfigurationsdatei zu ermöglichen als Reaktion auf die Bestimmung, dass das erste Eingabepasswort mit dem Diebstahlschutzpasswort übereinstimmt.

3. Router (R1) nach einem der vorhergehenden Ansprüche, wobei die Mittel ferner den Router (R1) veranlassen, das mindestens eine von Zugreifen auf und Modifizieren der Konfiguration des Routers (R1) zu verhindern und das mindestens eine von Zugreifen auf und Modifizieren der Konfigurationsdatei zu verhindern als Reaktion auf die Bestimmung, dass das erste Eingabepasswort nicht mit dem Diebstahlschutzpasswort übereinstimmt.

4. Router (R1) nach einem der vorhergehenden Ansprüche, wobei
die Mittel ferner den Router (R1) veranlassen,
die verschlüsselte Konfigurationsdatei aus einem gesicherten Bereich des Speichers (110) zu erhalten, und
die verschlüsselte Konfigurationsdatei zu entschlüsseln, um eine entschlüsselte Konfigurationsdatei zu erhalten, und
den Router (R1) basierend auf der entschlüsselten Konfigurationsdatei zu konfigurieren, und
die Steuerung des mindestens eine von Zugreifen auf und Modifizieren der Konfigurationsdatei ferner das Verhindern des Ersetzens der verschlüsselten Konfigurationsdatei durch eine andere Konfigurationsdatei umfasst.

5. Router (R1) nach einem der vorhergehenden Ansprüche, wobei das gesicherte Diebstahlschutzpasswort verschlüsselt und in einem gesicherten Bereich des Speichers (110) gespeichert ist.

6. Router (R1) nach Anspruch 5, wobei der gesicherte Bereich des Speichers (110) mindestens eines von einem Nur-Lese-Startspeicher (boot-ROM), einem Bootloader-Speicher, oder einem Trusted Platform Module (TPM) umfasst.

7. Router (R1) nach einem der vorhergehenden Ansprüche, wobei die Konfigurationsdatei, wenn sie auf den Router (R1) geladen wird, den Router (R1) konfiguriert, um Normen und Protokolle eines Netzwerks einzuhalten.

8. Router (R1) nach einem der vorhergehenden Ansprüche, wobei die Mittel ferner den Router (R1) veranlassen,
die Eingabe eines zweiten Eingabepassworts für ein Zeitintervall zu verhindern als Reaktion auf die Bestimmung, dass das erste Eingabepasswort nicht mit dem gesicherten Diebstahlschutzpasswort übereinstimmt.

9. Router (R1) nach Anspruch 8, wobei die Mittel ferner den Router (R1) veranlassen,
zur Eingabe des zweiten Eingabepassworts nach Ablauf des Zeitintervalls aufzufordern,
zu bestimmen, ob das zweite Eingabepasswort mit dem gesicherten Diebstahlschutzpasswort übereinstimmt, und
mindestens eines von Zugreifen auf und Modifizieren der Konfigurationsdatei und der Konfiguration des Routers (R1) zu steuern basierend darauf, ob das zweite Eingabepasswort mit dem gesicherten Diebstahlschutzpasswort übereinstimmt.

10. Router (R1) nach einem der vorhergehenden Ansprüche, wobei die Mittel ferner den Router (R1) veranlassen,
einen ersten Hash unter Verwendung des ersten Eingabepassworts zu erzeugen, und
zu bestimmen, ob das erste Eingabepasswort mit dem gesicherten Diebstahlschutzpasswort übereinstimmt, indem der erste Hash mit einem zweiten Hash verglichen wird, der unter Verwendung des gesicherten Diebstahlschutzpassworts erzeugt wurde.

11. Verfahren zum Betreiben einer Diebstahlschutzfunktion eines Routers (R1), wobei der Router (R1) eine Verarbeitungsschaltung (120) und einen Speicher (110) umfasst, wobei das Verfahren umfasst:
Bestimmen (S330), ob ein erstes Eingabepasswort mit einem gesicherten Diebstahlschutzpasswort übereinstimmt, das in dem Speicher (110) gespeichert ist; und
Steuern (S340) mindestens eines von Zugreifen auf und Modifizieren einer Konfigurationsdatei und der Konfiguration des Routers (R1) basierend darauf, ob das erste Eingabepasswort mit dem gesicherten Diebstahlschutzpasswort übereinstimmt, wobei die Konfigurationsdatei eine verschlüsselte Konfigurationsdatei ist, die unter Verwendung eines Verschlüsselungsschlüssels verschlüsselt ist, wobei der Verschlüsselungsschlüssel auf dem gesicherten Diebstahlschutzpasswort basiert,
Entschlüsseln mindestens eines Teils der verschlüsselten Konfigurationsdatei, und
Bestimmen, ob ein Ergebnis der Entschlüsselung gültig ist;
Verhindern einer Ausführung der Ausgabe der Entschlüsselung als Reaktion auf die Bestimmung, dass das Ergebnis ungültig ist.

12. Verfahren nach Anspruch 11, wobei das Steuern (S340) des mindestens einen von Zugreifen auf und Modifizieren der Konfigurationsdatei und der Konfiguration des Routers (R1) das Ermöglichen des mindestens einen von Zugreifen auf und Modifizieren der Konfiguration des Routers (R1) und das Ermöglichen des mindestens einen von Zugreifen auf und Modifizieren der Konfigurationsdatei als Reaktion auf die Bestimmung, dass das erste Eingabepasswort mit dem gesicherten Diebstahlschutzpasswort übereinstimmt, umfasst.

13. Verfahren nach einem der Ansprüche 11-12, wobei das Steuern (S340) des mindestens einen von Zugreifen auf und Modifizieren der Konfigurationsdatei und der Konfiguration des Routers (R1) das Verhindern des mindestens einen von Zugreifen auf und Modifizieren der Konfiguration des Routers (R1) und das Verhindern des Zugreifens auf und Modifizierens der Konfigurationsdatei als Reaktion auf die Bestimmung, dass das erste Eingabepasswort nicht mit dem gesicherten Diebstahlschutzpasswort übereinstimmt, umfasst.

## Revendications

1. Routeur (R1) comprenant des moyens pour :
déterminer si un premier mot de passe d'entrée correspond à un mot de passe antivol sécurisé stocké dans une mémoire (110) du routeur (R1), et
contrôler au moins l'un parmi l'accès et la modification du fichier de configuration et de la configuration du routeur (R1) selon que le premier mot de passe d'entrée correspond au mot de passe antivol sécurisé, le fichier de configuration étant un fichier de configuration chiffré, chiffré à l'aide d'une clé de chiffrement, la clé de chiffrement étant basée sur le mot de passe antivol sécurisé,
déchiffrer au moins une partie du fichier de configuration chiffré, et
déterminer si un résultat du déchiffrement est valide ;
empêcher une exécution de la sortie du déchiffrement en réponse à la détermination que le résultat est invalide.

2. Routeur (R1) selon la revendication 1, dans lequel les moyens amènent en outre le routeur (R1) à permettre l'au moins l'un parmi l'accès et la modification de la configuration du routeur (R1) et à permettre l'au moins l'un parmi l'accès et la modification du fichier de configuration en réponse à la détermination que le premier mot de passe d'entrée correspond au mot de passe antivol.

3. Routeur (R1) selon l'une quelconque des revendications précédentes, dans lequel les moyens amènent en outre le routeur (R1) à empêcher l'au moins l'un parmi l'accès et la modification de la configuration du routeur (R1) et à empêcher l'au moins l'un parmi l'accès et la modification du fichier de configuration en réponse à la détermination que le premier mot de passe d'entrée ne correspond pas au mot de passe antivol.

4. Routeur (R1) selon l'une quelconque des revendications précédentes, dans lequel
les moyens amènent en outre le routeur (R1) à
obtenir le fichier de configuration chiffré à partir d'une zone sécurisée de la mémoire (110), et
déchiffrer le fichier de configuration chiffré pour obtenir un fichier de configuration déchiffré, et
configurer le routeur (R1) sur la base du fichier de configuration déchiffré, et
le contrôle de l'au moins l'un parmi l'accès et la modification du fichier de configuration comprend en outre l'empêchement du remplacement du fichier de configuration chiffré par un autre fichier de configuration.

5. Routeur (R1) selon l'une quelconque des revendications précédentes, dans lequel le mot de passe antivol sécurisé est chiffré et stocké dans une zone sécurisée de la mémoire (110).

6. Routeur (R1) selon la revendication 5, dans lequel la zone sécurisée de la mémoire (110) comprend au moins l'un parmi une mémoire morte d'amorçage (boot-ROM), une mémoire de chargeur d'amorçage, ou un module de plateforme de confiance (TPM).

7. Routeur (R1) selon l'une quelconque des revendications précédentes, dans lequel le fichier de configuration, lorsqu'il est chargé sur le routeur (R1), configure le routeur (R1) pour se conformer aux normes et protocoles d'un réseau.

8. Routeur (R1) selon l'une quelconque des revendications précédentes, dans lequel les moyens amènent en outre le routeur (R1) à
empêcher la saisie d'un second mot de passe d'entrée pendant un intervalle de temps en réponse à la détermination que le premier mot de passe d'entrée ne correspond pas au mot de passe antivol sécurisé.

9. Routeur (R1) selon la revendication 8, dans lequel les moyens amènent en outre le routeur (R1) à
inviter à saisir le second mot de passe d'entrée après expiration de l'intervalle de temps,
déterminer si le second mot de passe d'entrée correspond au mot de passe antivol sécurisé, et
contrôler l'au moins l'un parmi l'accès et la modification du fichier de configuration et de la configuration du routeur (R1) selon que le second mot de passe d'entrée correspond au mot de passe antivol sécurisé.

10. Routeur (R1) selon l'une quelconque des revendications précédentes, dans lequel les moyens amènent en outre le routeur (R1) à
générer un premier hachage en utilisant le premier mot de passe d'entrée, et
déterminer si le premier mot de passe d'entrée correspond au mot de passe antivol sécurisé en comparant le premier hachage avec un second hachage généré en utilisant le mot de passe antivol sécurisé.

11. Procédé de fonctionnement d'une fonction antivol d'un routeur (R1), le routeur (R1) comprenant un circuit de traitement (120) et une mémoire (110), le procédé comprenant :
la détermination (S330) de si un premier mot de passe d'entrée correspond à un mot de passe antivol sécurisé stocké dans la mémoire (110) ; et
le contrôle (S340) d'au moins l'un parmi l'accès et la modification d'un fichier de configuration et de la configuration du routeur (R1) selon que le premier mot de passe d'entrée correspond au mot de passe antivol sécurisé, le fichier de configuration étant un fichier de configuration chiffré, chiffré à l'aide d'une clé de chiffrement, la clé de chiffrement étant basée sur le mot de passe antivol sécurisé,
le déchiffrement d'au moins une partie du fichier de configuration chiffré, et
la détermination de si un résultat du déchiffrement est valide ;
l'empêchement d'une exécution de la sortie du déchiffrement en réponse à la détermination que le résultat est invalide.

12. Procédé selon la revendication 11, dans lequel le contrôle (S340) de l'au moins l'un parmi l'accès et la modification du fichier de configuration et de la configuration du routeur (R1) comprend le fait de permettre l'au moins l'un parmi l'accès et la modification de la configuration du routeur (R1) et de permettre l'au moins l'un parmi l'accès et la modification du fichier de configuration en réponse à la détermination que le premier mot de passe d'entrée correspond au mot de passe antivol sécurisé.

13. Procédé selon l'une quelconque des revendications 11-12, dans lequel le contrôle (S340) de l'au moins l'un parmi l'accès et la modification du fichier de configuration et de la configuration du routeur (R1) comprend l'empêchement de l'au moins l'un parmi l'accès et la modification de la configuration du routeur (R1) et l'empêchement de l'accès et de la modification du fichier de configuration en réponse à la détermination que le premier mot de passe d'entrée ne correspond pas au mot de passe antivol sécurisé.
